(19) Europäisches Patentamt / European Patent Office / Office européen des brevets

(11) **EP 3 037 986 A1**

(12) **EUROPEAN PATENT APPLICATION**
published in accordance with Art. 153(4) EPC

(43) Date of publication:
**29.06.2016 Bulletin 2016/26**

(21) Application number: **14838200.5**

(22) Date of filing: **18.07.2014**

(51) Int Cl.:
*G06F 17/30* $^{(2006.01)}$

(86) International application number:
**PCT/JP2014/003817**

(87) International publication number:
**WO 2015/025467 (26.02.2015 Gazette 2015/08)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **21.08.2013 JP 2013171291**

(71) Applicant: **NEC Solution Innovators, Ltd.**
**Tokyo 136-8627 (JP)**

(72) Inventors:
• **OKAJIMA, Yuzuru**
**Tokyo 136-8627 (JP)**
• **YAMAMOTO, Kosuke**
**Tokyo 136-8627 (JP)**

(74) Representative: **Vossius & Partner**
**Patentanwälte Rechtsanwälte mbB**
**Siebertstrasse 3**
**81675 München (DE)**

(54) **TEXT CHARACTER STRING SEARCH DEVICE, TEXT CHARACTER STRING SEARCH METHOD, AND TEXT CHARACTER STRING SEARCH PROGRAM**

(57) A prefix set identification unit 81 identifies a set of prefixes ending with an input string from a set of prefixes each of which is a string of one or more continuous characters extracted from a beginning of each search candidate string. A prefix identification unit 82 identifies a prefix with the highest prefix score from the set of prefixes ending with the input string, the prefix score being defined for each prefix by the highest string score among string scores associated with search candidate strings beginning with the prefix. A string identification unit 83 identifies a search candidate string with the highest string score from among the search candidate strings beginning with the identified prefix.

FIG. 5

SOURCE DICTIONARY

| KEY ID | KEY | Rk |
|---|---|---|
| 0 | aba | 3 |
| 1 | abcc | 9 |
| 2 | cab | 4 |
| 3 | cac | 7 |

TRIE

S —

| ROW NUMBER | STT | Sα | S last |
|---|---|---|---|
| 0 | | $ | 0 |
| 1 | $ | a | 0 |
| 2 | $ | c | 1 |
| 3 | $a | b | 1 |
| 4 | $aba | # | 1 |
| 5 | $ca | b | 0 |
| 6 | $ca | c | 1 |
| 7 | $ab | a | 0 |
| 8 | $ab | c | 1 |
| 9 | $cab | # | 1 |
| 10 | $c | a | 1 |
| 11 | $cac | # | 1 |
| 12 | $abc | c | 1 |
| 13 | $abcc | # | 1 |

PREFIX ENDING WITH "ab" { (rows 7, 8, 9)

| PREFIX ID | Rp |
|---|---|
| 0 | 9 |
| 1 | 9 |
| 2 | 3 |
| 3 | 7 |
| 4 | 9 |
| 5 | 4 |
| 6 | 7 |
| 7 | 7 |
| 8 | 9 |
| 9 | 9 |

EP 3 037 986 A1

## Description

### Technical Field

The present invention relates to a string search device, a string search method, and a string search program for searching for a key containing an input string as a substring.

### Background Art

Methods of supporting human text input have become popular and indispensable to our lives. The input support includes, for example, displaying search keywords as search candidates in an input form of a search engine and displaying uniform resource locators (URLs) as candidates in a URL input form in a web browser. In addition, the input support also includes, for example, displaying conversion candidates at the time of predictive conversion of the input method editor (IME), displaying candidates for correct spelling in a spell checker, and the like.

Such input support is implemented as a search in a dictionary. Strings likely to be input by a user are previously registered as keys in the dictionary. When the user starts an input of a string anew, the dictionary is searched with the string input by the user as a search query and appropriate keys are acquired as input candidates and displayed on a screen. For example, in the recommendation of search keywords, search keywords input in the past by the user are previously registered in the dictionary and used as candidates for input.

In an actual situation, there is no need to list all keys corresponding to candidates. For example, in a situation of recommending search keywords, it is sufficient to recommend top k high in the input frequency as candidates. The matter of searching for the top k keys with the high scores in this manner is referred to as "Top-k search (Top-k dictionary search)."

Non Patent Literature (NPL) 1 describes a data structure for acquiring top keys from among prefix-matching keys at a high speed by using a trie and a ranged minimum query (RMQ) structure referred to as "RMQ Trie."

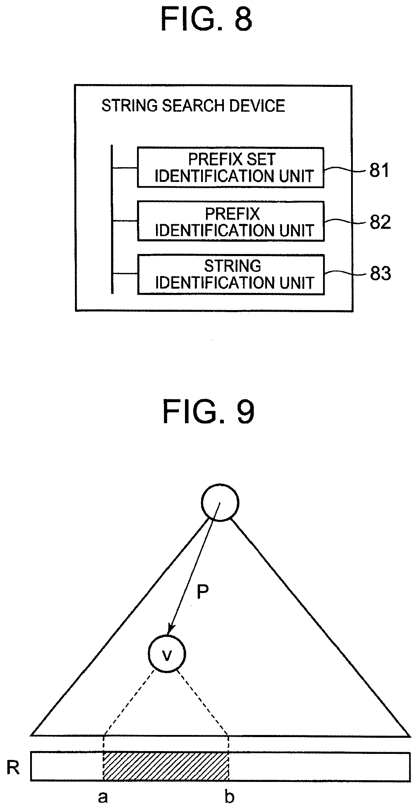

FIG. 9 is an explanatory diagram illustrating the RMQ Trie. In the example illustrated in Fig. 9, a node v having a search query P as a prefix is found to acquire a key range [a, b] under the node v. All keys included in the range [a, b] each have the search query P as a prefix. In this case, a search is performed for the scores in the range [a, b] out of the array R of the scores arranged associated with the respective keys, thereby acquiring k keys with the highest scores each having the search query P as a prefix.

NPL 1 describes other two types of data structures for use in acquiring the top keys at a high speed from among the prefix-matching keys similarly to the RMQ Trie.

Furthermore, NPL 2 describes the Top-k search in document search. This approach enables the Top-k search by adding additional data necessary for the Top-k search to the data structure on the basis of the data structure for the document search.

### Citation List

### Non Patent Literature

NPL 1: Bo-June (Paul) Hsu and Giuseppe Ottaviano, "Space-Efficient Data Structures for Top-k Completion," WWW' 13 Proceedings of the 22nd international conference on World Wide Web, p583-594, May, 2013

NPL 2: Wing-Kai Hon, Rahul Shah, Sharma V. Thankachan, "Towards an Optimal Space-and-Query-Time Index for Top-k Document Retrieval," CPM' 12 Proceedings of the 23rd Annual conference on Combinatorial Pattern Matching, p173-184

### Summary of Invention

### Technical Problem

If the keys included in a dictionary extremely increase, the number of keys corresponding to input strings also increases, thereby requiring long time for a search. Therefore, it is desired to acquire a key as a candidate at a high speed.

On the other hand, it is possible to acquire a candidate for a prefix-matching key at a high speed by using the data structures described in NPL 1, but it is difficult to acquire a candidate for a substring-matching key.

Moreover, it is possible to implement Top-k search in document search by using the data structure described in NPL 2. Since data used for the document search is large in size, however, the approach has a problem that the size of target data is too large if the search method used for document search is directly used for a dictionary.

Therefore, it is an object of the present invention to provide a string search device, a string search method, and a string search program capable of performing a substring match search for strings at a high speed while reducing the amount of data.

**Solution to Problem**

A string search device according to the present invention is a string search device which searches for a search candidate string including an input string from a set of search candidate strings associated with string scores each indicating a degree that a search should be preferentially performed, the string search device including: a prefix set identification unit which identifies a set of prefixes ending with the input string from a set of prefixes each of which is a string of one or more continuous characters extracted from a beginning of each search candidate string; a prefix identification unit which identifies a prefix with the highest prefix score from the set of prefixes ending with the input string, the prefix score being defined for each prefix by the highest string score among string scores associated with search candidate strings beginning with the prefix; and a string identification unit which identifies a search candidate string with the highest string score from among the search candidate strings beginning with the identified prefix.

A string search method according to the present invention is a string search method of searching for a search candidate string including an input string from a set of search candidate strings associated with string scores each indicating a degree that a search should be preferentially performed, the string search method including: a prefix set identification step of identifying a set of prefixes ending with the input string from a set of prefixes each of which is a string of one or more continuous characters extracted from a beginning of each search candidate string; a prefix identification step of identifying a prefix with the highest prefix score from the set of prefixes ending with the input string, the prefix score being defined for each prefix by the highest string score among string scores associated with search candidate strings beginning with the prefix; and a string identification step of identifying a search candidate string with the highest string score from among the search candidate strings beginning with the identified prefix.

A string search program according to the present invention is a string search program applied to a computer which searches for a search candidate string including an input string from a set of search candidate strings associated with string scores each indicating a degree that a search should be preferentially performed, the string search program causing the computer to perform: a prefix set identification process of identifying a set of prefixes ending with the input string from a set of prefixes each of which is a string of one or more continuous characters extracted from a beginning of each search candidate string; a prefix identification process of identifying a prefix with the highest prefix score from the set of prefixes ending with the input string, the prefix score being defined for each prefix by the highest string score among string scores associated with search candidate strings beginning with the prefix; and a string identification process of identifying a search candidate string with the highest string score from among the search candidate strings beginning with the identified prefix.

**Advantageous Effects of Invention**

According to the present invention, a substring match search for strings can be performed at a high speed while reducing the amount of data.

**Brief Description of Drawings**

[Fig. 1] It is a block diagram illustrating a configuration example of a first exemplary embodiment of a string search device according to the present invention.
[Fig. 2] It is an explanatory diagram illustrating an example of a trie corresponding to keys.
[Fig. 3] It is an explanatory diagram illustrating an example of the first XBW.
[Fig. 4] It is an explanatory diagram illustrating an example of the second XBW.
[Fig. 5] It is an explanatory diagram illustrating an example of a data structure stored by a search information storage unit.
[Fig. 6] It is a flowchart illustrating an operation example of a string search device of a first exemplary embodiment.
[Fig. 7] It is an explanatory diagram illustrating an example of a process of selecting keys with high string scores.
[Fig. 8] It is a block diagram illustrating an outline of the string search device according to the present invention.
[Fig. 9] It is an explanatory diagram illustrating an RMQ Trie.

**Description of Embodiments**

First of all, an outline of a string search device of the present invention will be described below. The present invention has been provided to achieve a data structure for searching for the top keys containing the input string as a substring in a space-saving manner at a high speed by extending XBW, which is a data structure for a dictionary, to Top-k search.

In the present invention, a score indicating a degree that a search should be preferentially performed (hereinafter, referred to as "string score") is assigned to each key which is a search candidate string and a set of keys is represented by a trie structure.

Furthermore, all the prefixes of the keys included in the set of keys are represented by the XBW structure used for the dictionary search. The string search device of the present invention identifies the range of prefixes ending with the input string by using the XBW structure. In addition, each prefix is associated with the highest score (hereinafter, referred to as "prefix score") among the scores of the keys beginning with the prefix. Therefore, the string search device identifies the prefix with the highest prefix score within the range of identified prefixes.

In the present invention, to identify the highest prefix score within the identified prefixes, an RMQ structure is used. Hereinafter, the RMQ structure, which is used to represent the relationship between the prefix and the prefix score in order to identify the highest prefix score, is referred to as "first RMQ structure." The string search device identifies a prefix with the highest prefix score within the range of identified prefixes by using the first RMQ structure.

Furthermore, the string search device identifies a key with the highest string score among the keys beginning with the identified prefix. In this case, the identified prefix corresponds to one node in the trie. Therefore, in order to identify the highest string score within the range of keys present under each node, as in the case of identifying the highest prefix score, the RMQ structure is used. Hereinafter, the RMQ structure used to represent the relationship between the key and the string score is referred to as "second RMQ structure." The string search device identifies the key with the highest string score from the range of keys beginning with the identified prefix by using the second RMQ structure.

After identifying the key with the highest string score, the string search device performs processing of searching for keys with the second highest and subsequent string scores in order to apply the string search to the Top-k search. The keys with the second highest and subsequent string scores are present in the positions of the second and subsequent keys beginning with the already-identified prefix or the first and subsequent keys beginning with an unidentified prefix.

Therefore, the string search device previously holds the prefix scores of identified prefixes and the string scores of identified keys. The string search device selects a key or a prefix with the highest score out of the retained string scores and prefix scores. If the selected one is a key, the string search device searches for a key with the next highest string score among the keys beginning with the same prefix as the selected key. Furthermore, if it is a prefix, the string search device searches for a prefix with the next highest prefix score to the selected prefix. By repeating this, it is possible to efficiently find keys with the top string scores out of the keys including the input string.

Hereinafter, preferred exemplary embodiments of the string search device according to the present invention will be described in more detail with reference to the accompanying drawings.

**Exemplary Embodiment 1**

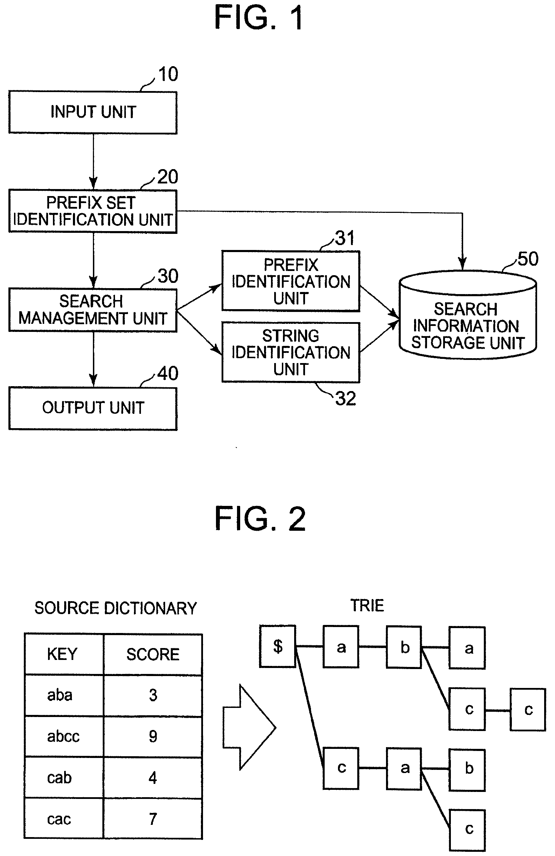

Fig. 1 is a block diagram illustrating a configuration example of a first exemplary embodiment of a string search device according to the present invention. The string search device of this exemplary embodiment includes an input unit 10, a prefix set identification unit 20, a search management unit 30, a prefix identification unit 31, a string identification unit 32, an output unit 40, and a search information storage unit 50.

The input unit 10 inputs a string of one or more characters. The string search device of this exemplary embodiment searches for a key which containing the input string as a substring. In the description below, the input string is referred to as "search query (or simply "query") P.

The search information storage unit 50 stores a set of keys which are search candidate strings. The keys used in this exemplary embodiment are associated with string scores as described above. Specifically, the string search device of this exemplary embodiment preferentially searches for keys with higher string scores from the set of keys.

In this exemplary embodiment, the keys to be searched for are represented by using a trie structure to reduce the amount of data. Fig. 2 is an explanatory diagram illustrating an example of a trie corresponding to keys. For example, if four words (aba, abcc, cab, cac) illustrated in Fig. 2 are present, the trie is constructed so that the same character shared by them is arranged in the same node. The search information storage unit 50 may store the keys themselves represented by the trie or may store only the structure of the trie as described later.

In addition, each leaf node represented in the tree structure corresponds to each key. Therefore, the search information storage unit 50 stores the score (string score) of each key illustrated in Fig. 2 in association with each leaf node. Thereby, at the time of reaching the leaf node by searching the trie, a string score corresponding to the key represented by the leaf node is able to be acquired.

Furthermore, the search information storage unit 50 stores a set of prefixes p so as to search for strings ending with a query P. The prefix p is a string of one or more continuous characters extracted from a beginning of each key. The set of the prefixes p may be sorted from the end in lexicographic order.

In this exemplary embodiment, a structure XBW is used to represent such a set of prefixes described above. XBW is a data structure capable of representing a labeled tree structure efficiently. The range search for the prefixes p ending with the query P is enabled by expressing the trie by using the XBW structure.

It is known that XBW is able to be implemented by two types of data structures for achieving equivalent operations. The first XBW has a structure of associating a character representing a child node, with respect to each prefix in the dictionary, in the node on the trie corresponding to the prefix. The second XBW has a structure of associating an ID of a prefix to be a parent node, with respect to each prefix in the dictionary, in the node on the trie corresponding to the prefix. Hereinafter, the content of each XBW will be described.

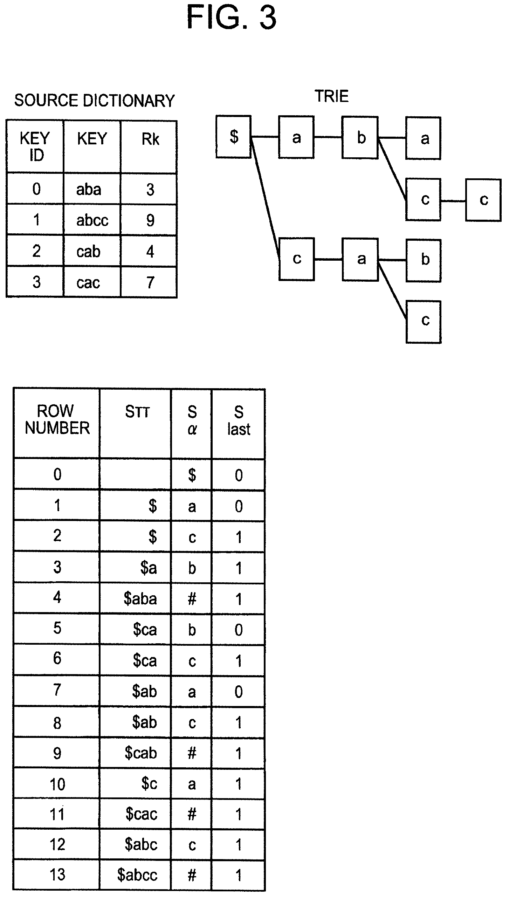

Fig. 3 is an explanatory diagram illustrating an example of the first XBW. In the first XBW illustrated in Fig. 3, the prefixes corresponding to the respective nodes of the trie are arranged from the end in lexicographic order and a character representing a child node is associated with each prefix. This structure enables a shift from each prefix to a child node representing a specific character, thereby enabling an operation equivalent to the operation of the trie. In addition, it is possible to perform a range search for prefixes p ending with the query P.

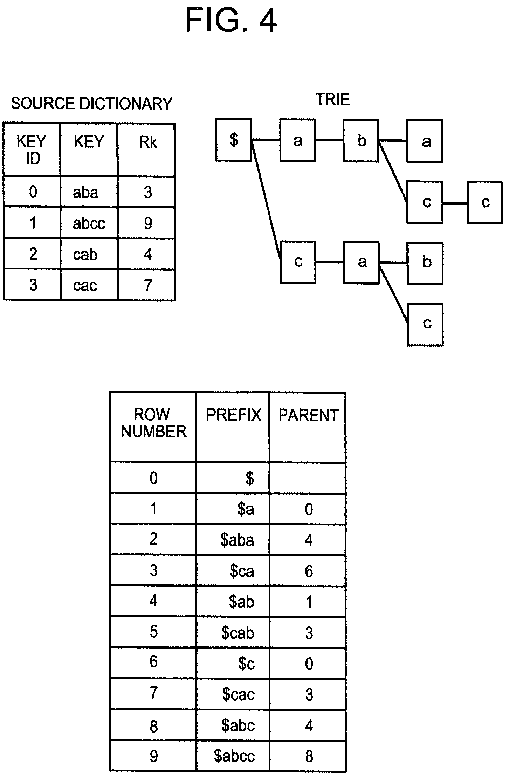

Fig. 4 is an explanatory diagram illustrating an example of the second XBW. In the second XBW illustrated in Fig. 4, the prefixes corresponding to the respective nodes of the trie are arranged from the end in lexicographic order and IDs are assigned to the respective prefixes. Then, the respective prefixes are associated with the parent IDs thereof. This structure enables a shift to the next parent node. Moreover, similarly to the first XBW, it is possible to perform a range search for prefixes p ending with the query P.

Incidentally, in the second XBW, it is difficult to search for a child node since only the parent IDs are acquired. Even when using the second XBW, however, it is possible to perform a range search for prefixes p ending with the query P. In this exemplary embodiment, either one of the XBWs is applicable.

The first XBW and the second XBW are described in Reference Literature 1 and Reference Literature 2, respectively.

<Reference Literature 1> Paolo Ferragina, Fabrizio Luccio, Giovanni Manzini and S. Muthukrishnan, "Structuring labeled trees for optimal succinctness, and beyond," FOCS '05 Proceedings of the 46th Annual IEEE Symposium on Foundations of Computer Science, Pages 184-196

<Reference Literature 2> Wing-Kai Hon, Tsung-Han Ku, Rahul Shah, Sharma V. Thankachan, and Jerey Scott Vitter, "Faster compressed dictionary matching", SPIRE'10 Proceedings of the 17th international conference on String processing and information retrieval, Pages 191-200

Moreover, in this exemplary embodiment, a score (specifically, a prefix score) is defined for each prefix. The prefix score is defined by the highest string score among the string scores associated with the key beginning with the prefix. The score can be expressed by an equation 1. Characters "Score" on the right side in equation 1 represents a string score and characters "Score" on the left side in equation 1 represents a prefix score.

$$\text{Score}(p) = \max\{\text{Score}(\text{pre (key beginning with prefix p)}\} \quad \text{(Eq. 1)}$$

In this exemplary embodiment, the set of keys is represented by a tree structure and therefore a key beginning with a certain prefix is present under the node corresponding to the prefix. Therefore, the prefix score is the highest string score among the keys present under the node.

In this exemplary embodiment, the first RMQ structure is added to the XBW structure so as to identify the prefix score corresponding to each node by using the first RMQ structure. Specifically, the prefix score of each prefix is stored in an array used in the RMQ. Hereinafter, the array in which the prefix scores are stored is referred to as "prefix score rank $R_p$." Since prefixes are sorted on the basis of the end, the prefixes ending with the same string are identified as a continuous range. Therefore, it is possible to identify the highest value in an arbitrary range of the prefix score rank $R_p$ by using the first RMQ structure.

Furthermore, in this exemplary embodiment, the string score of each key is allowed to be identified by using the second RMQ structure. Specifically, the string score of each key is stored in an array used in the RMQ. Hereinafter, the array in which the string scores are stored is referred to as "string score rank $R_k$." Since keys are sorted from the beginning, the keys beginning with a certain prefix are identified as a continuous range. Therefore, it is possible to identify the highest value in an arbitrary range of string score rank $R_k$ by using the second RMQ structure.

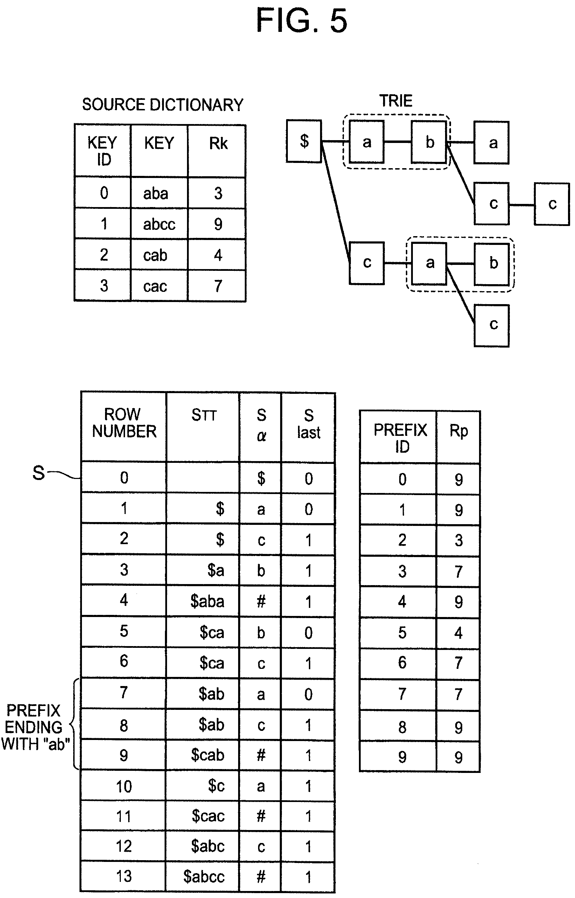

Fig. 5 is an explanatory diagram illustrating an example of a data structure stored by a search information storage unit. The XBW structure in this exemplary embodiment is represented by a set S having a set of three elements for each node in the trie. $S_{last}$ is a binary flag, which is set to 1 if the node is the last child for the parent node of the node, otherwise 0. $S_{\alpha}$ is a character represented by the node. $S_{\pi}$ is a prefix corresponding to the parent node of the node, which is a string obtained by connecting the characters from the root to the parent node in sequence. Incidentally, $S_{\pi}$ does not include the character of the node itself. Each set of three elements is sorted in lexicographic order by a comparison from the last character to the first character of the prefix included in each element. In the example illustrated in Fig. 5, row numbers are assigned to the sorted sets ($S_{\pi}$, $S_{\alpha}$, $S_{last}$) in order from the beginning. In Fig. 5, $ indicates the beginning of a key, # indicates the end of the key.

Moreover, as illustrated in Fig. 5, a prefix score $R_p$ is defined for each prefix. Since the prefix score $R_p$ is calculated from the string score associated with each key as described above, the prefix score need not be retained explicitly. The prefix IDs illustrated in Fig. 5 are assigned in the order that all prefixes included in the dictionary are sorted from the end. Therefore, the order of the prefix IDs coincides with the order of the prefixes with $S_{last}$ set to 1.

The structure illustrated in Fig. 5 enables the range of prefixes ending with the query P to be identified. For example, it is understood that the rows corresponding to the prefix ending with a query "ab" are rows corresponding to the row numbers 7 to 9 (specifically, rows corresponding to "$ab" and "$cab"). In addition, it is understood that the prefix scores $R_p$ of "$ab" and "$cab" are 9 and 4 corresponding to the prefix IDs 4 and 5 respectively.

As long as the range of prefixes can be identified, it is possible to acquire the ID of the prefix with the highest score in the range by using the first RMQ structure. Furthermore, the prefix IDs with the second highest and subsequent scores can be acquired by recursively using the first RMQ structure.

From the above, it is possible to select an arbitrary number of prefixes p with the higher prefix scores out of the prefixes p ending with the query P by using the XBW structure.

The prefix set identification unit 20 identifies a set of prefixes including the input string from a set of prefixes stored in the search information storage unit 50. Specifically, the prefix set identification unit 20 identifies a set of prefixes ending with the input string. For example, if the search information storage unit 50 stores a set of prefixes illustrated in Fig. 5, an input of "ab" as a string causes the prefix set identification unit 20 to identify the prefixes (i.e., "$ab" and "$cab") present in the range of row numbers 7 to 9 as a set of prefixes.

The prefix identification unit 31 identifies the prefixes with the higher prefix scores from the set of the prefixes identified by the prefix set identification unit 20. The prefix identification unit 31 may identify the prefix with the highest prefix score or the prefixes corresponding to the top-n prefix scores (n is an arbitrary natural number).

The string identification unit 32 identifies keys with the higher string scores among the keys beginning with the identified prefix. The string identification unit 32 may search for the key with the highest string score or the keys corresponding to the top-m string scores (m is an arbitrary natural number).

For example, it is assumed that the prefix identification unit 31 identified "$ab" as a prefix in Fig. 5. In this case, the keys beginning with the identified prefix "$ab" are "aba" and "abcc." The string score for "aba" is 3 and the string score for "abcc" is 9. In this case, the string identification unit 32 may select "abcc" as a key.

The search management unit 30 identifies a range of prefixes searched for by the prefix identification unit 31. The search management unit 30 identifies a range of keys searched for by the string identification unit 32 and identifies the keys identified by the string identification unit 32 as search target keys.

Specifically, the search management unit 30, first, identifies a range of prefixes identified by the prefix set identification unit 20 as a range of prefixes to be searched for by the prefix identification unit 31. Then, the search management unit 30 identifies the keys beginning with the prefixes within the identified range of keys to be searched for by the string identification unit 32. Furthermore, the search management unit 30 identifies the keys identified by the string identification unit 32 as search target keys.

Thereafter, the search management unit 30 identifies a range of keys other than already-identified keys from among the keys beginning with the prefix of the keys identified by the string identification unit 32. Furthermore, the search management unit 30 identifies a range of prefixes other than the prefixes identified by the prefix identification unit 31 from the set of prefixes identified by the prefix set identification unit 20.

Then, the search management unit 30 causes the prefix identification unit 31 and the string identification unit 32 to perform the respective processes. Specifically, the prefix identification unit 31 identifies the prefix with the highest prefix score from the range of prefixes identified by the search management unit 30. Furthermore, the string identification unit 32 identifies the key with the highest string score from the range of keys identified by the search management unit 30.

The search management unit 30 compares the prefix score of the prefix identified from the range of prefixes with the string score of the key identified from the range of keys. If the highest score is the string score as a result of the comparison, a search is performed for a key with the next highest string score to the key concerned among the keys beginning with the same prefix as the key. Specifically, the search management unit 30 divides the keys into two groups, excluding the key concerned from the range of keys used when the key is identified, and identifies the two ranges. The string identification unit 32 identifies the key with the highest string score from the two ranges.

If the highest score is a prefix score, a prefix with the next highest prefix score to the prefix concerned is searched for. Specifically, the search management unit 30 divides the prefixes into two groups, excluding the prefix from the range of prefixes used when the prefix is identified, and identifies the two ranges. The prefix identification unit 31 identifies the prefix with the highest prefix score from the ranges.

The output unit 40 outputs the key identified by the search management unit 30 as a search result.

The prefix set identification unit 20, the search management unit 30, the prefix identification unit 31, and the string identification unit 32 are implemented by the CPU of a computer operating according to a program (a string search program). For example, the program may be stored in a storage unit (not illustrated) of the string search device and the CPU may read the program to operate as the prefix set identification unit 20, the search management unit 30, the prefix identification unit 31, and the string identification unit 32 according to the program.

Furthermore, each of the prefix set identification unit 20, the search management unit 30, the prefix identification unit 31, and the string identification unit 32 may be implemented by dedicated hardware.

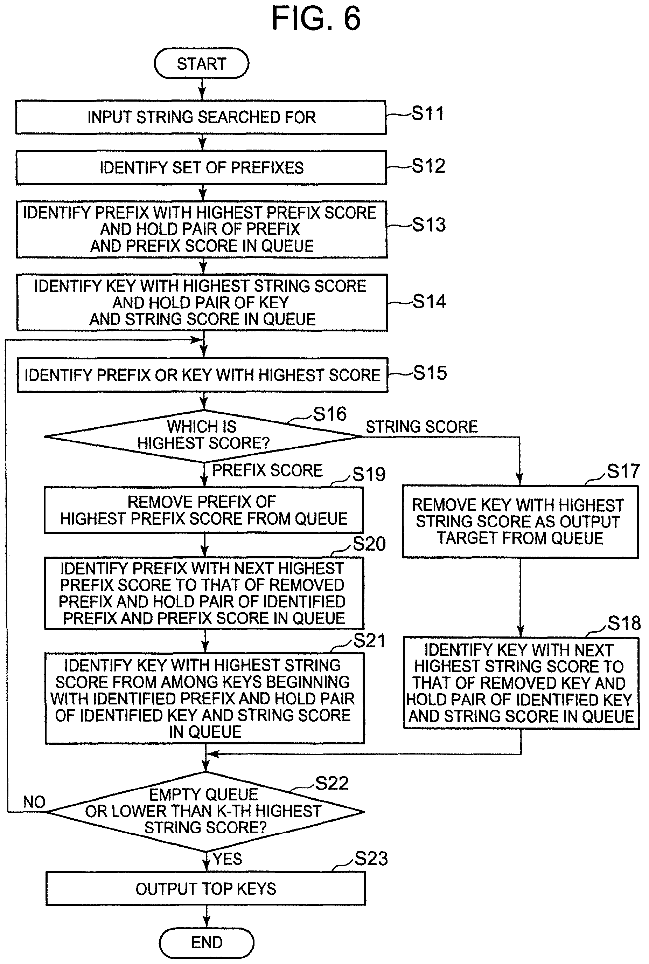

The following describes the operation of the string search device of this exemplary embodiment. Fig. 6 is a flowchart illustrating an operation example of the string search device of this exemplary embodiment. Here, it is assumed that k keys are selected as candidates. In addition, the search management unit 30 is assumed to include a priority queue (not illustrated) which holds a pair of the prefix and the prefix score identified by the prefix identification unit 31 and a pair of the key and the string score identified by the string identification unit 32. The priority queue is a queue for holding information of the candidates. In the following description, the priority queue is simply referred to as "queue."

The input unit 10 inputs a string to be searched for (step S11). The prefix set identification unit 20 refers to the search information storage unit 50 and identifies a set of prefixes including the input string (step S12).

The prefix identification unit 31 identifies a prefix with the highest prefix score from the set of prefixes identified by the prefix set identification unit 20 and holds the pair of the identified prefix and the prefix score in the queue (step S13).

The string identification unit 32 identifies a key with the highest string score from among the keys beginning with the identified prefix and holds the pair of the identified key and the string score in the queue (step S14).

Subsequently, the search management unit 30 identifies the prefix or the key with the highest score among the prefix scores or the string scores held in the queue (step S15). Then, the search management unit 30 determines whether the highest score is a prefix score or a string score (step S16).

If the highest score is a string score ("string score" in step S16), the search management unit 30 identifies the key with the highest string score as an output target and removes the key from the queue (step S17). Then, the string identification unit 32 identifies the key with the next highest string score to the string score of the removed key within the range of keys used in identifying the removed key and holds the pair of the identified key and the string score in the queue (step S18).

On the other hand, if the highest score is a prefix score ("prefix score" in step S16), the search management unit 30 removes the prefix with the prefix score from the queue (step S19). Then, the prefix identification unit 31 identifies a prefix with the next highest prefix score to the prefix score of the removed prefix within the range of prefixes used in identifying the removed prefix and holds the pair of the identified prefix and the prefix score in the queue (step S20).

Furthermore, the string identification unit 32 identifies a key with the highest string score from among the keys beginning with the prefix identified in step S20 and holds the pair of the identified key and the string score in the queue (step S21).

If the queue is empty or the highest score in the queue is lower than the k-th highest string score which has been found until then (Yes in step S22), the search management unit 30 outputs keys having been found until then as top keys (step S23). On the other hand, unless the queue is empty and the highest score in the queue is lower than the k-th highest string score which has been found until then (No in step S22), the processes of step S15 and subsequent steps are repeated.

Thus, the pair of the prefix and the prefix score identified by the prefix identification unit 31 and the pair of the key and the string score identified by the string identification unit 32 are held in the same priority queue, thereby enabling the pair of the highest score to be extracted out of the prefix scores or the string scores.

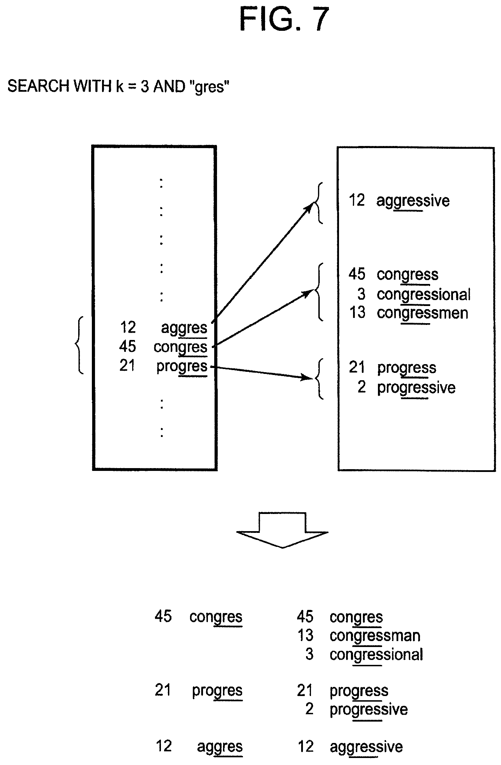

The following describes the operation illustrated in Fig. 6 by using a specific example. Fig. 7 is an explanatory diagram illustrating an example of a process of selecting keys with high string scores. In the example illustrated in Fig. 7, a string "gres" is input and there is illustrated a method of searching for three keys (k = 3) containing the string as a substring. The list illustrated in the frame on the left side of Fig. 7 is a list schematically illustrating the XBW structure, where a numeral represents a prefix score and a character represents a prefix. Furthermore, the list illustrated in the frame on the right side of Fig. 7 is a list schematically illustrating the trie, where a numeral represents a string score and a character represents a key.

The prefix set identification unit 20 identifies the range of keys containing the string "gres" as a substring, with "aggres," "congres," and "progres" as candidates, from the set of prefixes represented by the XBW structure. As long as the prefix is identified, the keys beginning with the prefix can be identified.

The prefix identification unit 31 selects a prefix with the highest score among the prefixes ending with the input string "gres" from the decided set of prefixes. In Fig. 7, there is illustrated a state where the selected prefixes are arranged in the descending order of the prefix score. In the example illustrated in Fig. 7, the prefix score of "congres" is the highest 45. Therefore, the prefix identification unit 31 identifies "congres" as a prefix.

The string identification unit 32 selects a key with the highest string score out of the keys beginning with the selected prefix. In the example illustrated in Fig. 7, there are three keys having the prefix "congres," namely "congress," "congressional," and "congressmen." The key with the highest string score among them is "congress." Therefore, the string identification unit 32 identifies "congress" as the first key and the search management unit 30 identifies the identified "congress" as a search target key.

At this stage, only one key is identified and therefore the process of identifying a key is repeated.

As described above, the search management unit 30 is previously provided with a priority queue for holding the information of candidates (not illustrated) to hold prefixes and keys which have been found until then into the queue along with their scores.

The search management unit 30 refers to the queue and selects one with the highest score out of the prefixes and keys held in the queue. If the selected one is a key, the string identification unit 32 searches for a key with the next highest string score within the same range of keys as is used for searching for the selected key. If the selected one is a prefix, the prefix identification unit 31 searches for a prefix with the next highest prefix score to the selected prefix within the same range of prefixes as is used for searching for the selected prefix.

In the case of this example, the prefix "congres" with the prefix score 45 and the key "congress" with the string score 45 are held in the queue. Since the scores are equal to each other at this time, it does not matter which of the key and the prefix is searched for first. If the key is searched for, the search management unit 30 pops the key "congress," first, to remove the key from the queue. Then, the string identification unit 32 searches for a key with the next highest string score to the string score of the key "congress" among the keys beginning with the same prefix "congres" as is used for acquiring the key "congress." Specifically, the search management unit 30 excludes the key "congress" this time from the range of keys having been searched when acquiring the key "congress" and divides the range into two parts. Then, the string identification unit 32 searches for a key with the highest string score within the two ranges. In this case, no key is present in a range earlier than the key "congress" in lexicographic order in the two ranges obtained by bisection with the key "congress" excluded. Therefore, it is only necessary to find a key with the highest string score in the range later than the key "congress" in lexicographic order. The key is "congressmen" with the string score 13. Therefore, the search management unit 30 holds the key anew into the queue.

If a prefix is searched for, the search management unit 30, first, pops the prefix "congres" and removes it from the queue. Then, the prefix identification unit 31 searches for a prefix with the next highest prefix score to the prefix "congres." Specifically, the search management unit 30 excludes the key "congres" this time from the range of prefixes having been searched when acquiring the prefix "congres" and divides the range into two parts. Then, the prefix identification unit 31 searches for a prefix with the highest prefix score within the two ranges. In this case, the prefixes with the highest prefix score within the two ranges obtained by bisection with the prefix "congres" are a prefix "aggres" with the prefix score 12 and a prefix "progres" with a prefix score 21. Therefore, the search management unit 30 holds the two prefixes anew into the queue.

Further, the string identification unit 32 acquires a key with the highest string score beginning with each of the prefixes "aggres" and "progres." Thereby, the string identification unit 32 acquires a key "aggressive" with a string score 12 and a key "progress" with a string score 21. Thus, it is possible to confirm that the prefix score of the prefix "aggres" is 12 and the prefix score of the prefix "progres" is 21 regarding the two prefixes acquired in the above.

In this exemplary embodiment, only the RMQ structure is held without holding the prefix scores themselves. Although the RMQ structure alone enables the prefix with the highest prefix score to be found, it does not enable the specific prefix score to be calculated. Therefore, in order to determine specifically what value the prefix score is after acquiring the prefix with the highest prefix score within the range, it is necessary to acquire the highest string score out of the keys beginning with the prefix.

According to the above processing, five scores are held in the queue: the prefix "progres" with the prefix score 21; the prefix "aggres" with the prefix score 12; the key "progress" with the string score 21; the key "congressmen" with the string score 13; and the key "aggressive" with the string score 12.

Since the highest score of them belongs to the prefix "progres" with the prefix score 21 or the key "progress" with the string score 21, either one of the prefix and the key may be searched for.

This process is repeated. If the prefix score of a newly found prefix is lower than the k-th highest string score which has been found until then, the search management unit 30 does not register the prefix in the queue. This is because the prefix with the next highest prefix score to the prefix has a score further lower than the score. Similarly, if the score of the newly-found key is lower than the k-th highest string score which has been found until then, the search management unit 30 does not register the key into the queue. Accordingly, it is possible to omit a search for prefixes with low prefix scores and for keys with low string scores, thereby enabling the top k keys in the scores to be efficiently collected.

If the queue is empty or the highest score in the queue is lower than the k-th highest string score which has been found until then, the search ends.

As described above, according to this exemplary embodiment, the prefix set identification unit 20 identifies a set of prefixes ending with the input string from the set of prefixes and the prefix identification unit 31 identifies a prefix with the highest prefix score from the set of the prefixes ending with the input string. Then, the string identification unit 32 identifies a key with the highest string score from among the keys beginning with the identified prefix.

Specifically, in this exemplary embodiment, the indexes for the prefixes and the keys are created and therefore a dictionary size is able to be reduced more than in the case of creating the indexes for all substrings. Moreover, in this exemplary embodiment, the prefix identification unit 31 identifies prefixes with higher prefix scores and the string identification unit 32 searches for keys with higher string scores from among the prefixes, and therefore top k keys can be efficiently found by searching for the keys from the highest score. Therefore, the present invention is able to perform a substring match search for strings at a high speed while reducing the amount of data.

For example, Japanese dictionaries, English dictionaries, query logs, or URLs often contain common prefixes. The string search device of this exemplary embodiment uses a trie as a data structure capable of collecting common prefixes together, thereby enabling a reduction in the data size. Although this exemplary embodiment has exemplified a case of representing keys by using the trie data structure, the data structure may be a Patricia tree. By using the Patricia tree, the data size can be reduced more than when using the tree structure of the trie.

Furthermore, the string search device of this exemplary embodiment includes the search management unit 30 for managing a search range. Specifically, the search management unit 30 identifies a range in which the already-identified key is excluded from the keys beginning with the prefix of the key identified by the string identification unit 32 and identifies a range in which the prefix identified by the prefix identification unit 31 is excluded from the set of the prefixes identified by the prefix set identification unit 20. Then, the prefix identification unit 31 identifies a prefix with the highest prefix score from the range of prefixes identified by the search management unit 30 and the string identification unit 32 identifies a key with the highest string score from the range of keys identified by the search management unit 30. This enables XBW used as a data structure for a dictionary to be extended to the Top-k search, thereby enabling the processing to be performed in a space-saving manner at a high speed when performing a substring match search for the top k candidates.

Exemplary Embodiment 2

The following describes a second exemplary embodiment of the string search device according to the present invention. The configuration of the string search device of this exemplary embodiment is the same as the configuration of the first exemplary embodiment. The string search device of the second exemplary embodiment, however, is intended to enable a reduction in the amount of held data more than the string search device of the first exemplary embodiment.

From the trie T described in the first exemplary embodiment, two data structures are generated. One is a data structure for prefixes and the other is a data structure for keys.

The data structure for prefixes includes xbw which is a XBW representation of the trie T and a first RMQ structure attached thereto. As described in the first exemplary embodiment, the prefixes are arranged in the order in which the prefixes are sorted from the end on the xbw data structure.

Moreover, the first RMQ structure is generated for the prefix score rank $R_p$ illustrated in the first exemplary embodiment. In this case, the search information storage unit 50 need not explicitly hold the prefix score rank $R_p$, but may hold only the first RMQ structure calculated from the prefix score rank $R_p$.

The data structure for keys includes a Patricia tree $T_c$ generated from the trie T, a second RMQ structure, and a string score rank $R_k$. The tree structure of the Patricia tree $T_c$ is represented using the DFUDS representation. Furthermore, in the Patricia tree $T_c$, the same number of bit strings as the number of nodes are prepared in order to distinguish only the leaf nodes of the tree structure.

A general Patricia tree holds the strings corresponding to the respective nodes. Meanwhile, the search information storage unit 50 of this exemplary embodiment removes the strings corresponding to the respective nodes and stores only a tree structure representing parent-child relationships between nodes. The reason why only the tree structure is stored will be described later.

In the following description, as illustrated in Fig. 5, it is assumed that the respective keys are sorted from the first character in lexicographic order and that key IDs are assigned to the keys in that order. In addition, it is assumed that the prefixes are sorted from the end in lexicographic order and that prefix IDs are assigned to the prefixes in that order. Moreover, the range of prefix IDs is represented by $[s_p, e_p]$ and the range on the set S representing prefixes is represented by $[s_s, e_s]$.

The prefix set identification unit 20 identifies the range $[s_p, e_p]$ of the prefix IDs ending with the input string. Specifically, the prefix set identification unit 20 identifies the range $[s_s, e_s]$, in which the end of the prefix is an input string, by using xbw. This range $[s_s, e_s]$, however, is a range on the set S, and therefore it is necessary to convert the range to the range $[s_p, e_p]$ of the prefix ID. Therefore, the prefix set identification unit 20 identifies $[s_p, e_p]$ by identifying what

number 1 is the first 1 or the last 1 included in $[s_s, e_s]$ on $S_{last}$. This is because the elements set to 1 on $S_{last}$ correspond to the prefix IDs in the same order in one-to-one relation.

The prefix identification unit 31 identifies a prefix with the highest prefix score from the range $[s_p, e_p]$ of the identified prefix ID. Specifically, the prefix identification unit 31 identifies the position of the prefix with the highest prefix score within the range $[s_p, e_p]$ by using the first RMQ structure. In addition, the position of the prefix identified here is denoted by $i_p$.

The search management unit 30 identifies the range of keys beginning with the prefix from the position $i_p$ of the identified prefix. Hereinafter, the range of keys beginning with the identified prefix is denoted by $[s_k, e_k]$. Specifically, the search management unit 30, first, identifies the last node having the prefix corresponding to the position $i_p$ of the prefix as the corresponding position is on S.

Subsequently, the search management unit 30 restores a string representing the prefix in xbw. Specifically, the search management unit 30 restores the string by connecting characters obtained by tracing the tree toward the parent from the node represented by the $i_s$-th row in xbw. The number of times for moving toward the parent from the node is equal to the length of the prefix.

At this time, the search management unit 30 calculates a difference d = is - $i_f$ from a position $i_f$ satisfying $S_{last}$ $[i_f]$ = 1, where the position if is located on this side of is and closest thereto, regarding each position is on the traced S. Then, the search management unit 30 stores the calculated values into the array d in the reverse order to the order of tracing the tree toward the parent. Unless the above if is present, however, the search management unit 30 stores values calculated with if = 0 into the array d.

Subsequently, the search management unit 30 moves a target position from the parent node to a child node according to the order of the values stored in the array d in the Patricia tree $T_c$. If, however, a corresponding value in the array d is 1, the search management unit 30 ignores the value and performs the processing for the next value.

Since xbw and $T_c$ are generated from the same trie T, the number of children of each node coincides with the order, except when the node has only one child. Therefore, the target position on $T_c$ is moved according to the array d, by which the position reaches the node $u_c$ on $T_c$ corresponding to the prefix.

The search management unit 30 subsequently identifies the range $[s_k, e_k]$ of keys corresponding to the descendants of the reached node $u_c$ by using DFUDS. All of the keys included in the range $[s_k, e_k]$ are children of the node $u_c$ and therefore it can be said that $[s_k, e_k]$ indicates the range of keys beginning with the identified prefix.

The string identification unit 32 identifies a key ID with the highest string score (hereinafter, the key ID is denoted by $i_k$) from the identified key range $[s_k, e_k]$. Specifically, the string identification unit 32 identifies the position $i_k$ of the key with the highest prefix score within the range $[s_k, e_k]$ by using the second RMQ structure.

The string identification unit 32 identifies the string of the key from the position $i_k$ of the identified key ID. The position $i_k$ corresponds to the $i_k$-th leaf node $u_i$ on the Patricia tree $T_c$. Therefore, the string identification unit 32 traces the Patricia tree $T_c$ toward the parent node from $u_i$ and stores the child node numbers into the array d in the reverse order to the order of tracing the tree toward the parent. The string identification unit 32 is able to identify the position of the node on xbw corresponding to $u_i$ by tracing xbw from the root in sequence according to the array d. Incidentally, if the child node is one, the position may be moved toward the leaf node unconditionally without referring to the array d. Therefore, the descendant of the node of the trie corresponding to the leaf node of the Patricia tree $T_c$ is not branched. Therefore, the string identification unit 32 is able to restore the key accurately by tracing a single strand.

As described above, the key information is obtained from xbw. Therefore, it is only necessary to leave only the parent-child relationships between nodes by removing the strings of the respective nodes in the Patricia tree.

For example, in Fig. 5, "$ab" can be reached by selecting a first child from the root and then selecting a first child at the selected node. Therefore, the search management unit 30 may store information "d = 1, 1" in the array d for identifying the selected node.

Hereinafter, a specific operation of the string search device of this exemplary embodiment will be described by using the example illustrated in Fig. 5. In this specification, it is assumed that the search query P = "ab" and k = 2. The range on S ending with P is $[s_s, e_s]$ = [7, 9]. The range on $R_p$ corresponding thereto is $[s_p, e_p]$ = [4, 5]. The position of the highest prefix score in this range is $i_p$ = 4. This corresponds to the position $i_S$ = 8 on S. The prefix corresponding to the above $i_S$ is "$ab." Since both are the first children, array d = 1, 1 is obtained.

By starting at the root node on the $T_c$, moving to a first child node, and moving to a first child node again, the node corresponding to "$ab" is reached The highest string score under the node is 9 and the key is distinguished by the key ID = 1. Therefore, a pair <1, 9> of the key ID and the string score is acquired. It is the key with the highest string score in the dictionary in Fig. 5.

The second-highest ranked key is the second key of the same prefix or the first key of any other prefix. The second key of the same prefix is a key distinguished by a key ID = 0 and the string score thereof is 3 (hereinafter, referred to as <0, 3>). Meanwhile, to find the first key of any other prefix, it is required to identify the range of prefixes excluding the prefix $i_p$ = 4 identified as the highest prefix score in the above. The range of the prefixes is divided into two groups, with the prefix $i_p$ = 4 excluded, by which the range $[s_p, e_p]$ = [5, 5] is identified. Then, a prefix with the highest prefix score is identified in the range [$s_p$, $e_p$] = [5, 5] to perform processing of identifying a key with the highest string score among the corresponding keys. In the example illustrated in Fig. 5, the processing corresponds to identifying a key with the highest string score among the keys beginning with the prefix "$cab." As a result, a pair <2, 4> of the key ID and the string score is identified anew.

Although three candidate pairs are identified so far, the pair <0, 3> with a low score is excluded. The finally remaining pairs are <1, 9> and <2, 4>. After these two pairs are identified, processing of restoring keys from the respective pairs is performed. The paths d in the $T_c$ are (1, 2) and (2, 1), respectively. The keys in the source dictionary corresponding to the keys are uniquely found by tracing xbw from the root, thus obtaining keys "$abcc #" and "$cab #."

The following describes a data size in the case of using the data structure described in this exemplary embodiment. Assuming that the trie T and a score rank $R_k$ are provided, "the number of nodes t > the number of keys 1" is satisfied. In general, the number of nodes t is roughly 10 times the number of keys 1.

When using the data structures described in this exemplary embodiment, the data size is expressed by the following equation 2.

$$| \text{XBW} | + | \text{first RMQ structure (prefix)} |$$

$$+ | T_c \text{ (Patricia tree)} | + | \text{second RMQ structure (key)} | + | R_k \text{ (score)} | \qquad \text{(Eq. 2)}$$

In equation 2, |XBW| represents a data size in the case of representing the trie T in xbw and $| R_k \text{ (score)} |$ represents the size of the array of string scores.

In addition, $T_c$ (Patricia tree) is generated from the trie T, and the tree structure is represented by DFUDS. In this exemplary embodiment, in order to distinguish only the leaf nodes of the tree structure, the same number of bit strings as the number of nodes are prepared to determine whether or not the node is a leaf node by using only each bit of the bit strings. Then, the Patricia tree in this exemplary embodiment is represented only by a tree structure with the strings removed. This is because the information of the strings is obtained from xbw as described above.

While the number of nodes of the Patricia tree is at most "21 - 1," it is necessary to prepare bits whose number is twice the number of nodes in DFUDS and the same number of bits as the number of nodes for bit strings for distinguishing the leaf nodes. Therefore, $| T_c \text{ (Patricia tree)} |$ is represented by 61 + o (1) bits.

Furthermore, for a string score rank $R_k$ (score) of a key, a second RMQ structure (key) is generated. | Second RMQ structure (key) | is represented by 21 + o (1) bits.

Assuming that XBW | and | $R_k$ (score) | are minimum data necessary for implementing a dictionary and scores, the overhead is at most "2t + 61 + o (t)" in the case of implementing the data structure described in this exemplary embodiment, thus reducing the amount of data as compared with popular methods.

The following describes a calculation amount in the case of using the data structures described in this exemplary embodiment. The calculation amount is calculated by O (k (log(k) + | P | + h)), where | P | represents the length of a query and h represents the average length of the keys registered in the dictionary. Thus, when using the data structure described in this exemplary embodiment, search processing can be performed independently of the data size.

The following describes an outline of the present invention. Fig. 8 is a block diagram illustrating the outline of the string search device according to the present invention. The string search device according to the present invention is a string search device which searches for a search candidate string including an input string from a set of search candidate strings (for example, keys) associated with string scores each indicating a degree that a search should be preferentially performed, the string search device including: a prefix set identification unit 81 (for example, the prefix set identification unit 20) which identifies a set of prefixes ending with the input string from a set of prefixes (for example, a set of prefixes in the XBW data structure) each of which is a string of one or more continuous characters extracted from a beginning of each search candidate string; a prefix identification unit 82 (for example, the prefix identification unit 31) which identifies a prefix with the highest prefix score (for example, a prefix score defined by equation 1) from the set of prefixes ending with the input string, the prefix score being defined for each prefix by the highest string score among string scores associated with search candidate strings beginning with the prefix; and a string identification unit 83 (for example, the string identification unit 32) which identifies a search candidate string with the highest string score from among the search candidate strings beginning with the identified prefix.

Thus, the prefix identification unit 82 identifies the prefix with the high prefix score and the string identification unit 83 searches for the search candidate string with the high string score from among the prefixes, thereby enabling efficient search for the top k search candidate strings by starting the search from the search candidate strings with the highest score.

Furthermore, the string search device may include a search management unit (for example, the search management unit 30) which manages a search range. The search management unit may identify a range of search candidate strings excluding already-identified search candidate strings from among the search candidate strings beginning with the prefix of the search candidate string identified by the string identification unit 83 and identify a range of prefixes excluding the prefix identified by the prefix identification unit 82 from the set of prefixes identified by the prefix set identification unit 81. Moreover, the prefix identification unit 82 may identify a prefix with the highest prefix score from the range of prefixes identified by the search management unit and the string identification unit 83 may identify a search candidate string with the highest string score from the range of search candidate strings identified by the search management unit.

In the above, the search management unit may include a queue (for example, a priority queue) for holding a pair of the prefix and the prefix score identified by the prefix identification unit 82 and a pair of the search target string and the string score identified by the string identification unit 83. Furthermore, the search management unit may identify a prefix or a search target string with the highest score out of the prefix scores or the string scores from among the pairs held in the queue and, in the case where the highest score is a string score, may remove the search target string of the string score from the queue and identify the search target string as an output target and, in the case where the highest score is a prefix score, may remove the prefix of the prefix score from the queue. In addition, the prefix identification unit 82 may identify the prefix with the next highest prefix score to the prefix score of the prefix removed from the queue, and the string identification unit 83 may identify the next highest string score to the string score of the removed search target string among the search target strings beginning with the same prefix as the prefix used for identifying the search target string removed from the queue in the case where the highest score is a string score and may identify a search target string with the highest string score from among the search target strings beginning with the prefix identified by the prefix identification unit 82 in the case where the highest score is a prefix score.

In this manner, one queue holds both of the pairs: the pair of the prefix and the prefix score; and the pair of the search target string and the string score, thereby enabling the determination of whether or not the highest score is a prefix score or a string score on the basis of the prefix scores or the string scores held in the queue. The prefix identification unit 82 and the string identification unit 83 repeat the above process on the basis of the highest score, thereby enabling efficient identification of the search target strings with the higher string scores.

Moreover, the string search device may further include a search information storage unit (for example, the search information storage unit 50) which stores a set of prefixes generated from a set of search candidate strings represented by a trie data structure and having a XBW data structure (for example, xbw) and a Patricia tree generated from the trie data structure and having only a tree structure representing a parent-child relationships between nodes with strings corresponding to the nodes of the Patricia tree excluded. Furthermore, the prefix identification unit 82 may identify a position of the prefix with the highest prefix score from the set of prefixes having the XBW data structure and the search management unit may identify the position (for example, $u_c$) of the corresponding node in the Patricia tree from the position of the identified prefix. This configuration enables a reduction of the amount of data stored for use in search.

In the above, the string identification unit 83 may identify the position (for example, $u_i$) of the search candidate string with the highest string score from among the search candidate strings present under the position of the node identified by the search management unit and identify a search candidate string corresponding to the identified position from among the prefixes having the XBW data structure.

Moreover, the prefix identification unit 82 may identify the prefix with the highest prefix score by performing a range search for the identified set of prefixes by using a first RMQ structure on the basis of a relationship between the prefix and the prefix score represented by the first RMQ structure.

Furthermore, the string identification unit 83 may identify the search candidate string with the highest string score by performing a range search for search candidate strings beginning with the identified prefix by using a second RMQ structure on the basis of a relationship between the search candidate string and the string score represented by the second RMQ structure.

Although the present invention has been described with reference to the exemplary embodiments and examples hereinabove, the present invention is not limited thereto. A variety of changes, which can be understood by those skilled in the art, may be made in the configuration and details of the present invention within the scope thereof.

This application claims priority to Japanese Patent Application No. 2013-171291 filed on Aug. 21, 2013, and the entire disclosure thereof is hereby incorporated herein by reference.

Industrial Applicability

The present invention is preferably applicable to a string search device which searches for a key containing an input string as a substring. The string search device according to the present invention is available, for example, for providing a search service.

**Reference Signs List**

| | |
|---|---|
| 10 | input unit |
| 20 | prefix set identification unit |
| 30 | search management unit |
| 31 | prefix identification unit |
| 32 | string identification unit |
| 40 | output unit |
| 50 | search information storage unit |

**Claims**

1. A string search device which searches for a search candidate string including an input string from a set of search candidate strings associated with string scores each indicating a degree that a search should be preferentially performed, the string search device comprising:

   a prefix set identification unit which identifies a set of prefixes ending with the input string from a set of prefixes each of which is a string of one or more continuous characters extracted from a beginning of each search candidate string;
   a prefix identification unit which identifies a prefix with the highest prefix score from the set of prefixes ending with the input string, the prefix score being defined for each prefix by the highest string score among string scores associated with search candidate strings beginning with the prefix; and
   a string identification unit which identifies a search candidate string with the highest string score from among the search candidate strings beginning with the identified prefix.

2. The string search device according to claim 1, further comprising a search management unit which manages a search range, wherein:

   the search management unit identifies a range of search candidate strings excluding already-identified search candidate strings from among the search candidate strings beginning with the prefix of the search candidate string identified by the string identification unit and identifies a range of prefixes excluding the prefix identified by the prefix identification unit from the set of prefixes identified by the prefix set identification unit;
   the prefix identification unit identifies a prefix with the highest prefix score from the range of prefixes identified by the search management unit; and
   the string identification unit identifies a search candidate string with the highest string score from the range of search candidate strings identified by the search management unit.

3. The string search device according to claim 2, wherein:

   the search management unit includes a queue for holding a pair of the prefix and the prefix score identified by the prefix identification unit and a pair of the search target string and the string score identified by the string identification unit;
   the search management unit identifies a prefix or a search target string with the highest score out of prefix scores or string scores from among the pairs held in the queue and, in the case where the highest score is a string score, removes the search target string of the string score from the queue and identifies the search target string as an output target and, in the case where the highest score is a prefix score, removes the prefix of the prefix score from the queue;
   the prefix identification unit identifies the prefix with the next highest prefix score to the prefix score of the prefix removed from the queue in the case where the highest score is a prefix score; and
   the string identification unit identifies the next highest string score to the string score of the removed search target string among the search target strings beginning with the same prefix as the prefix used for identifying the search target string removed from the queue in the case where the highest score is a string score, and identifies a search target string with the highest string score from among the search target strings beginning with the prefix identified by the prefix identification unit in the case where the highest score is a prefix score.

4.  The string search device according to any one of claims 1 to 3, further comprising a search information storage unit which stores a set of prefixes generated from a set of search candidate strings represented by a trie data structure and having a XBW data structure and a Patricia tree generated from the trie data structure and having only a tree structure representing a parent-child relationships between nodes with strings corresponding to the nodes of the Patricia tree excluded, wherein:

    the prefix identification unit identifies a position of the prefix with the highest prefix score from the set of prefixes having the XBW data structure; and
    the search management unit identifies the position of the corresponding node in the Patricia tree from the position of the identified prefix.

5.  The string search device according to claim 4, wherein the string identification unit identifies the position of the search candidate string with the highest string score from among the search candidate strings present under the position of the node identified by the search management unit and identifies a search candidate string corresponding to the identified position from among the prefixes having the XBW data structure.

6.  The string search device according to any one of claims 1 to 5, wherein the prefix identification unit identifies the prefix with the highest prefix score by performing a range search for the identified set of prefixes by using a first RMQ structure on the basis of a relationship between the prefix and the prefix score represented by the first RMQ structure.

7.  The string search device according to any one of claims 1 to 6, wherein the string identification unit identifies the search candidate string with the highest string score by performing a range search for search candidate strings beginning with the identified prefix by using a second RMQ structure on the basis of a relationship between the search candidate string and the string score represented by the second RMQ structure.

8.  A string search method of searching for a search candidate string including an input string from a set of search candidate strings associated with string scores each indicating a degree that a search should be preferentially performed, the string search method comprising:

    a prefix set identification step of identifying a set of prefixes ending with the input string from a set of prefixes each of which is a string of one or more continuous characters extracted from a beginning of each search candidate string;
    a prefix identification step of identifying a prefix with the highest prefix score from the set of prefixes ending with the input string, the prefix score being defined for each prefix by the highest string score among string scores associated with search candidate strings beginning with the prefix; and
    a string identification step of identifying a search candidate string with the highest string score from among the search candidate strings beginning with the identified prefix.

9.  The string search method according to claim 8, further comprising a search management step of managing a search range, wherein:

    the search management step includes identifying a range of search candidate strings excluding already-identified search candidate strings from among the search candidate strings beginning with the prefix of the search candidate string identified in the string identification step and identifying a range of prefixes excluding the prefixes identified in the prefix identification step from the set of prefixes identified in the prefix set identification step;
    the prefix identification step includes identifying a prefix with the highest prefix score from the range of prefixes identified in the search management step; and
    the string identification step includes identifying a search candidate string with the highest string score from the range of search candidate strings identified in the search management step.

10. A string search program applied to a computer which searches for a search candidate string including an input string from a set of search candidate strings associated with string scores each indicating a degree that a search should be preferentially performed, the string search program causing the computer to perform:

    a prefix set identification process of identifying a set of prefixes ending with the input string from a set of prefixes each of which is a string of one or more continuous characters extracted from a beginning of each search candidate string;

a prefix identification process of identifying a prefix with the highest prefix score from the set of prefixes ending with the input string, the prefix score being defined for each prefix by the highest string score among string scores associated with search candidate strings beginning with the prefix; and

a string identification process of identifying a search candidate string with the highest string score from among the search candidate strings beginning with the identified prefix.

11. The string search program according to claim 10, further causing the computer to perform a search management process of managing a search range, wherein:

in the search management process, the computer is caused to identify a range of search candidate strings excluding already-identified search candidate strings from among the search candidate strings beginning with the prefix of the search candidate string identified in the string identification process and is caused to identify a range of prefixes excluding the prefixes identified in the prefix identification process from the set of prefixes identified in the prefix set identification process;

in the prefix identification process, the computer is caused to identify a prefix with the highest prefix score from the range of prefixes identified in the search management process; and

in the string identification process, the computer is caused to identify a search candidate string with the highest string score from the range of search candidate strings identified in the search management process.

# FIG. 1

# FIG. 2

SOURCE DICTIONARY

| KEY | SCORE |
|-----|-------|
| aba | 3 |
| abcc | 9 |
| cab | 4 |
| cac | 7 |

TRIE

# FIG. 3

SOURCE DICTIONARY

| KEY ID | KEY | Rk |
|--------|------|----|
| 0 | aba | 3 |
| 1 | abcc | 9 |
| 2 | cab | 4 |
| 3 | cac | 7 |

TRIE

| ROW NUMBER | STT | S α | S last |
|-----------|-------|-----|--------|
| 0 | | $ | 0 |
| 1 | $ | a | 0 |
| 2 | $ | c | 1 |
| 3 | $a | b | 1 |
| 4 | $aba | # | 1 |
| 5 | $ca | b | 0 |
| 6 | $ca | c | 1 |
| 7 | $ab | a | 0 |
| 8 | $ab | c | 1 |
| 9 | $cab | # | 1 |
| 10 | $c | a | 1 |
| 11 | $cac | # | 1 |
| 12 | $abc | c | 1 |
| 13 | $abcc | # | 1 |

# FIG. 4

SOURCE DICTIONARY

| KEY ID | KEY | Rk |
|--------|------|----|
| 0 | aba | 3 |
| 1 | abcc | 9 |
| 2 | cab | 4 |
| 3 | cac | 7 |

TRIE

| ROW NUMBER | PREFIX | PARENT |
|------------|--------|--------|
| 0 | $ | |
| 1 | $a | 0 |
| 2 | $aba | 4 |
| 3 | $ca | 6 |
| 4 | $ab | 1 |
| 5 | $cab | 3 |
| 6 | $c | 0 |
| 7 | $cac | 3 |
| 8 | $abc | 4 |
| 9 | $abcc | 8 |

# FIG. 5

SOURCE DICTIONARY

| KEY ID | KEY | Rk |
|--------|-----|-----|
| 0 | aba | 3 |
| 1 | abcc | 9 |
| 2 | cab | 4 |
| 3 | cac | 7 |

TRIE

S

| ROW NUMBER | STT | S α | S last |
|------------|-----|-----|--------|
| 0 | | $ | 0 |
| 1 | $ | a | 0 |
| 2 | $ | c | 1 |
| 3 | $a | b | 1 |
| 4 | $aba | # | 1 |
| 5 | $ca | b | 0 |
| 6 | $ca | c | 1 |
| 7 | $ab | a | 0 |
| 8 | $ab | c | 1 |
| 9 | $cab | # | 1 |
| 10 | $c | a | 1 |
| 11 | $cac | # | 1 |
| 12 | $abc | c | 1 |
| 13 | $abcc | # | 1 |

PREFIX ENDING WITH "ab" (rows 7, 8, 9)

| PREFIX ID | Rp |
|-----------|-----|
| 0 | 9 |
| 1 | 9 |
| 2 | 3 |
| 3 | 7 |
| 4 | 9 |
| 5 | 4 |
| 6 | 7 |
| 7 | 7 |
| 8 | 9 |
| 9 | 9 |

# FIG. 6

START

INPUT STRING SEARCHED FOR — S11

IDENTIFY SET OF PREFIXES — S12

IDENTIFY PREFIX WITH HIGHEST PREFIX SCORE
AND HOLD PAIR OF PREFIX
AND PREFIX SCORE IN QUEUE — S13

IDENTIFY KEY WITH HIGHEST STRING SCORE
AND HOLD PAIR OF KEY
AND STRING SCORE IN QUEUE — S14

IDENTIFY PREFIX OR KEY WITH HIGHEST SCORE — S15

WHICH IS
HIGHEST SCORE? — S16

PREFIX SCORE

STRING SCORE

REMOVE PREFIX OF
HIGHEST PREFIX SCORE FROM QUEUE — S19

REMOVE KEY WITH HIGHEST
STRING SCORE AS OUTPUT
TARGET FROM QUEUE — S17

IDENTIFY PREFIX WITH NEXT HIGHEST
PREFIX SCORE TO THAT OF REMOVED
PREFIX AND HOLD PAIR OF IDENTIFIED
PREFIX AND PREFIX SCORE IN QUEUE — S20

IDENTIFY KEY WITH HIGHEST STRING
SCORE FROM AMONG KEYS BEGINNING
WITH IDENTIFIED PREFIX AND HOLD PAIR
OF IDENTIFIED KEY AND STRING SCORE
IN QUEUE — S21

IDENTIFY KEY WITH NEXT
HIGHEST STRING SCORE TO
THAT OF REMOVED KEY AND
HOLD PAIR OF IDENTIFIED KEY
AND STRING SCORE IN QUEUE — S18

EMPTY QUEUE
OR LOWER THAN K-TH HIGHEST
STRING SCORE? — S22

NO

YES

OUTPUT TOP KEYS — S23

END

# FIG. 7

SEARCH WITH k = 3 AND "gres"

```
          ┌ ⋮                              ┌ 12  aggressive
          │ ⋮
          │ ⋮
          │ ⋮                              ┌ 45  congress
          │ ⋮                              │  3  congressional
          │ ⋮                              │ 13  congressmen
      ┌ 12    aggres ┐
      │ 45    congres │                    ┌ 21  progress
      └ 21    progres ┘                    │  2  progressive
          │ ⋮
          └ ⋮
```

```
    45    congres        45   congres
                         13   congressman
                          3   congressional

    21    progres        21   progress
                          2   progressive

    12    aggres         12   aggressive
```

# FIG. 8

STRING SEARCH DEVICE

PREFIX SET
IDENTIFICATION UNIT —— 81

PREFIX
IDENTIFICATION UNIT —— 82

STRING
IDENTIFICATION UNIT —— 83

# FIG. 9

P

V

R

a        b

## INTERNATIONAL SEARCH REPORT

| International application No. |
| --- |
| PCT/JP2014/003817 |

**A. CLASSIFICATION OF SUBJECT MATTER**
*G06F17/30*(2006.01)i

According to International Patent Classification (IPC) or to both national classification and IPC

**B. FIELDS SEARCHED**

Minimum documentation searched (classification system followed by classification symbols)
G06F17/30

Documentation searched other than minimum documentation to the extent that such documents are included in the fields searched
| Jitsuyo Shinan Koho | 1922–1996 | Jitsuyo Shinan Toroku Koho | 1996–2014 |
| Kokai Jitsuyo Shinan Koho | 1971–2014 | Toroku Jitsuyo Shinan Koho | 1994–2014 |

Electronic data base consulted during the international search (name of data base and, where practicable, search terms used)
THE ACM DIGITAL LIBRARY, IEEE Xplore

**C. DOCUMENTS CONSIDERED TO BE RELEVANT**

| Category* | Citation of document, with indication, where appropriate, of the relevant passages | Relevant to claim No. |
| --- | --- | --- |
| A | WO 2008/090606 A1 (Fujitsu Ltd.), 31 July 2008 (31.07.2008), paragraphs [0037] to [0092]; fig. 3 to 11 & US 2009/0327284 A1 | 1–11 |
| A | WO 2011/104754 A1 (Mitsubishi Electric Corp.), 01 September 2011 (01.09.2011), paragraphs [0015] to [0019]; fig. 6 & US 2012/0317098 A1 & CN 102770863 A | 1–11 |
| A | Bo-June (Paul) Hsu, Giuseppe Ottaviano, Space-efficient data structures for Top-k completion, WWW '13 Proceedings of the 22nd international conference on World Wide Web [online], 2013.05.13, p.583-593, [retrieval date 07 October 2014 (07.10.2014)], Internet <URL: http://dl.acm.org/citation.cfm?id=2488440> | 1–11 |

☒ Further documents are listed in the continuation of Box C.　　☐ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search<br>　09 October, 2014 (09.10.14) | Date of mailing of the international search report<br>　21 October, 2014 (21.10.14) |
| --- | --- |
| Name and mailing address of the ISA/<br>　Japanese Patent Office | Authorized officer |
| Facsimile No. | Telephone No. |

Form PCT/ISA/210 (second sheet) (July 2009)

**INTERNATIONAL SEARCH REPORT**

| International application No. |
| --- |
| PCT/JP2014/003817 |

C (Continuation). DOCUMENTS CONSIDERED TO BE RELEVANT

| Category* | Citation of document, with indication, where appropriate, of the relevant passages | Relevant to claim No. |
| --- | --- | --- |
| A | Paolo Ferragina, Fabrizio Luccio, Giovanni Manzini and S. Muthukrishnan, Structuring labeled trees for optimal succinctness, and beyond, FOCS '05 Proceedings of the 46th Annual IEEE Symposium on Foundations of Computer Science [online], 2005, p.184-193, [retrieval date 07 October 2014 (07.10.2014)], Internet <URL: http://ieeexplore.ieee.org/stamp/stamp.jsp?tp=&arnumber=1530713> | 1-11 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2013171291 A

### Non-patent literature cited in the description

- **BO-JUNE (PAUL) HSU ; GIUSEPPE OTTAVIANO.** Space-Efficient Data Structures for Top-k Completion. *WWW' 13 Proceedings of the 22nd international conference on World Wide Web,* May 2013, 583-594
- **WING-KAI HON ; RAHUL SHAH ; SHARMA V. THANKACHAN.** Towards an Optimal Space-and-Query-Time Index for Top-k Document Retrieval. *CPM' 12 Proceedings of the 23rd Annual conference on Combinatorial Pattern Matching,* 173-184
- **PAOLO FERRAGINA ; FABRIZIO LUCCIO ; GIOVANNI MANZINI ; S. MUTHUKRISHNAN.** Structuring labeled trees for optimal succinctness, and beyond. *FOCS '05 Proceedings of the 46th Annual IEEE Symposium on Foundations of Computer Science,* 184-196
- **WING-KAI HON ; TSUNG-HAN KU ; RAHUL SHAH ; SHARMA V. THANKACHAN ; JEREY SCOTT VITTER.** Faster compressed dictionary matching. *SPIRE'10 Proceedings of the 17th international conference on String processing and information retrieval,* 191-200